# EUROPEAN PATENT APPLICATION

(11) **EP 4 421 827 A1**
(43) Date of publication of application: **28.08.2024**
(21) Application number: 21961421.1
(22) Date of filing: 21.10.2021
(51) Int. Cl.: H01B 11/00, H01B 7/18

(54) **COAXIAL CABLE, COAXIAL CABLE WITH CONNECTOR, AND WIRE DISCHARGE PROCESSOR**

(71) Applicant: FANUC CORPORATION, Oshino-mura Minamitsuru-gun Yamanashi 401-0597 (JP)
(72) Inventor: FURUTA, Tomoyuki, Minamitsuru-gun, Yamanashi 401-0597 (JP); NAKASHIMA, Yasuo, Minamitsuru-gun, Yamanashi 401-0597 (JP)
(74) Representative: Schmidt, Steffen J.
(86) International application number: PCT/JP2021/038958
(87) International publication number: WO 2023/067769

(57) **Abstract**

A coaxial cable (10) comprises: a core wire part (12) which is linear and which includes a core wire (16) and a tubular insulator (18) that covers the core wire (16); and a shield (14) that covers the core wire part (12). The shield (14) has a braided structure in which a plurality of bundles (20) having strands aligned therein are knit in a mesh shape. The width dimension (WD) of each of the plurality of bundles (20) is at least the radius (RD) of the core wire part (12).

## Description

### TECHNICAL FIELD

The present invention relates to a coaxial cable, a connector-equipped coaxial cable (a coaxial cable with a connector) including the coaxial cable, and a wire electrical discharge machine (a wire discharge processor) including the connector-equipped coaxial cable.

### BACKGROUND ART

In JP 2013-086190 A, a wire electrical discharge machine is disclosed. The wire electrical discharge machine includes a machining power supply (electrical discharge device) and a plurality of feeder lines (coaxial cables).

The electrical discharge device generates electrical discharge between a wire electrode and a workpiece (an object to be machined) via the plurality of coaxial cables. The workpiece is machined in response to the electrical discharge.

### SUMMARY OF THE INVENTION

The coaxial cable includes an inner conductive body (core wire), an insulator, an outer conductive body (shield), and a sheath. The core wire is covered with the insulator. The insulator is covered with the shield. The shield is covered with the sheath.

The core wire and the shield are separately connected to the electrical discharge device. Therefore, in order to connect the coaxial cable and the electrical discharge device, the core wire and the shield need to be separated from each other in advance at an end of the coaxial cable. However, the work of separating the core wire and the shield takes time during cable manufacturing.

The present invention has the object of solving the aforementioned problem.

A first aspect of the present invention is characterized by a coaxial cable including: a core wire portion that includes a core wire and a tubular insulator that covers the core wire, the core wire portion being linear; and a shield that covers the core wire portion, wherein the shield has a braided structure in which a plurality of bundles each including wires arranged side by side are braided in a mesh pattern, and the plurality of bundles each have a width equal to or larger than a radius of the core wire portion.

A second aspect of the present invention is characterized by a connector-equipped coaxial cable including: the coaxial cable according to the first aspect; and a connector connected to the coaxial cable, wherein the connector includes: a first terminal to which an end portion of the core wire is connected, the end portion of the core wire being pulled out from between the plurality of bundles braided in the mesh pattern; and a second terminal to which an end portion of the shield is connected.

A third aspect of the present invention is characterized by a wire electrical discharge machine including: the connector-equipped coaxial cable according to the second aspect; a wire electrode movable relative to a workpiece; and an electrical discharge device connected to the connector, the electrical discharge device being configured to apply a voltage to the wire electrode and the workpiece via the coaxial cable to generate electric discharge between the workpiece and the wire electrode, wherein the electrical discharge device is connected to one of the wire electrode and the workpiece via the core wire, and is connected to another of the wire electrode and the workpiece via the shield.

According to the aspects of the present invention, since the space can be easily opened up between the bundles of the shield, the worker can easily pull out the core wire from the shield.

### BRIEF DESCRIPTION OF DRAWINGS

FIG. 1A is a schematic configuration diagram of a coaxial cable according to an embodiment; FIG. 1B is a diagram showing a shield in FIG. 1A spread between four bundles;
FIG. 2 is a schematic configuration diagram of a connector-equipped coaxial cable including the coaxial cable of FIG. 1A; and
FIG. 3 is a schematic configuration diagram of a wire electrical discharge machine including the connector-equipped coaxial cable shown in FIG. 2.

### DETAILED DESCRIPTION OF THE INVENTION

### [Embodiment]

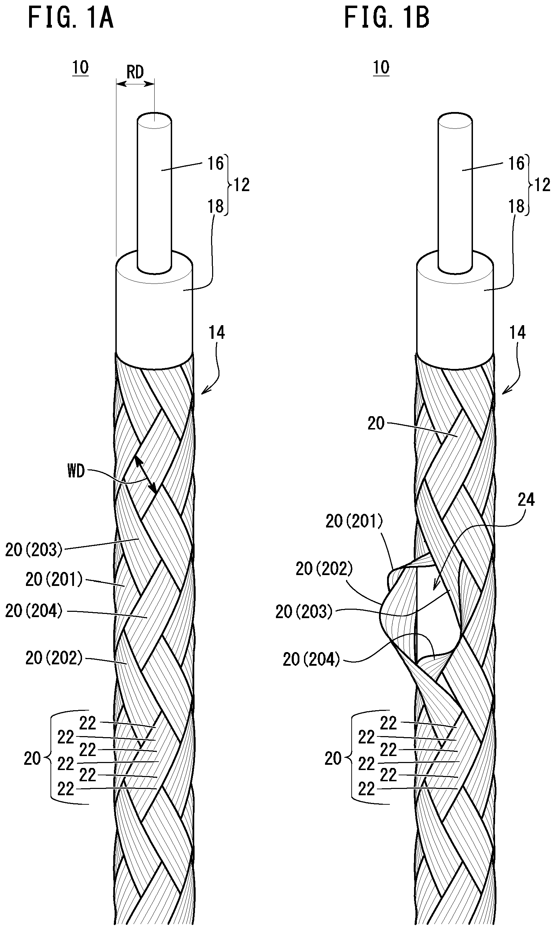

FIG. 1A is a schematic configuration diagram of a coaxial cable 10 according to an embodiment.

The coaxial cable 10 includes a core wire portion 12 and a braided shield (shield) 14.

The core wire portion 12 is a linear member including a core wire 16 and an insulator 18. The core wire 16 is a conductive member (for example, a copper wire). The insulator 18 is a tubular insulating member (e.g., a resin) that covers the core wire 16. The insulator 18 in FIG. 1A is partially omitted to show the core wire 16.

The shield 14 is a conductive member different from the core wire portion 12. The shield 14 covers the insulator 18. Therefore, the shield 14 covers the core wire portion 12. The shield 14 in FIG. 1A is partially omitted to show the core wire portion 12. The coaxial cable 10 may further include a sheath. The sheath is an insulating member (for example, a resin) that covers the shield 14.

The shield 14 has a structure (braided shield structure) in which a plurality of bundles 20 are braided in a mesh pattern. Each of the plurality of bundles 20 is formed of a plurality of lined-up conductive wires (element wires) 22. Each of the plurality of wires 22 is, for example, a copper wire. The plurality of wires 22 of each bundle 20 are arranged side by side along the outer circumferential surface of the core wire portion 12. A direction in which the plurality of wires 22 forming the bundle 20 are arranged side by side is defined as a widthwise direction of the bundle 20. The width WD in FIG. 1A indicates the length of the bundle 20 in the widthwise direction.

Each of the plurality of bundles 20 in FIG. 1A is composed of six wires 22. However, the number of the wires 22 of each of the plurality of bundles 20 is not particularly limited, as long as it is within a range not inconsistent with the description below.

The braided shield structure is more likely to maintain the density of the plurality of wires 22 than a structure (served shield structure) in which the wires 22 are spirally wound along the circumferential direction of the core wire portion 12. For example, a general coaxial cable is bent to form a bent portion. Here, if the shield of the coaxial cable has a served shield structure, the intervals between the plurality of wires are likely to increase at the bent portion of the coaxial cable. That is, the density of the plurality of wires decreases in the bent portion. In contrast, the plurality of wires 22 of the shield 14 are woven into a mesh pattern. Therefore, the intervals between the plurality of wires 22 are unlikely to increase even when the coaxial cable 10 is bent. That is, the density of the plurality of wires 22 is unlikely to decrease.

Further, the shield 14 is more likely to suppress leakage of electromagnetic noise and an increase in impedance than a served shield. For example, as described above, the density of the plurality of wires in the served shield is likely to decrease in the bent portion. As a result, electromagnetic noise is likely to leak at the bent portion. In addition, when the density of the plurality of wires decreases, the impedance of the shield (the plurality of wires) increases. In contrast, the density of the plurality of wires 22 in the shield 14 is less likely to decrease. Therefore, the shield 14 is less likely to leak electromagnetic noise. In addition, an increase in impedance of the shield 14 (the plurality of wires 22) is suppressed.

However, the core wire portion 12 (core wire 16) and the shield 14 are connected to different terminals. Therefore, the core wire portion 12 (core wire 16) and the shield 14 are separated from each other in advance before being connected to the respective terminals.

The core wire 16 and the shield 14 are separated by unbraiding the braided structure of the shield 14. However, the shield 14 has a braided structure. In general, the work of unbraiding the thin wire material (the wires 22) is a time-consuming work. Therefore, if the braided structure is simply adopted as the structure of the shield (14), the working time of the worker may be prolonged.

Therefore, each of the plurality of bundles 20 of the present embodiment has a width WD equal to or larger than the radius RD of the core wire portion 12 (WD ≥ RD). This makes it easy to separate the core wire portion 12 and the shield 14 from each other at an end of the coaxial cable 10 while suppressing an increase in impedance of the shield 14. The reason is as follows.

FIG. 1B is a diagram showing the shield 14 of FIG. 1A in which a space is opened up between the four bundles 20 (201 to 204) .

The plurality of wires 22 forming one bundle 20 are relatively easily shifted together along the width direction of the bundle 20 by the worker applying force. Here, if the width WD of each of the plurality of bundles 20 is equal to or larger than the radius RD of the core wire portion 12, a space (a pull-out hole 24) is easily made, between the four bundles 20 (201 to 204), so as to open up to a width corresponding to the diameter of the core wire portion 12.

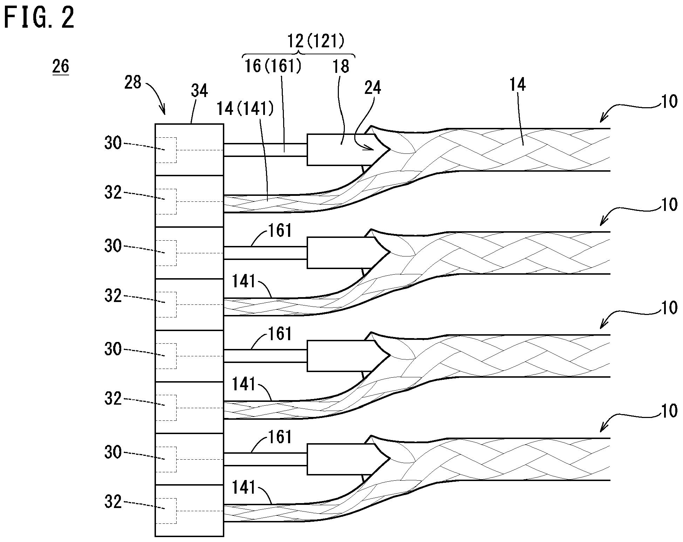

In this case, the worker can easily pull out the core wire portion 12 from the pull-out hole 24. Thus, the core wire portion 12 and the shield 14 are separated from each other at an end of the coaxial cable 10 (see FIG. 2).

Moreover, when making and widening the pull-out hole in the shield 14, the braided structure is not unbraided except for the four bundles 20 that are moved to widen the pull-out hole 24. Therefore, the density of the wires 22 is not reduced in the portions other than the pull-out hole 24. That is, the impedance of the shield 14 is unlikely to be high.

FIG. 2 is a schematic configuration diagram of a connector-equipped coaxial cable (a coaxial cable with a connector) 26, including the coaxial cable 10 shown in FIG. 1A.

The use of the coaxial cable 10 facilitates manufacture of the connector-equipped coaxial cable 26 shown in FIG. 2.

The connector-equipped coaxial cable 26 includes a first connector (connector) 28 and a plurality of coaxial cables 10. The connector-equipped coaxial cable 26 of FIG. 2 includes four coaxial cables 10. However, the number of coaxial cables 10 is not particularly limited.

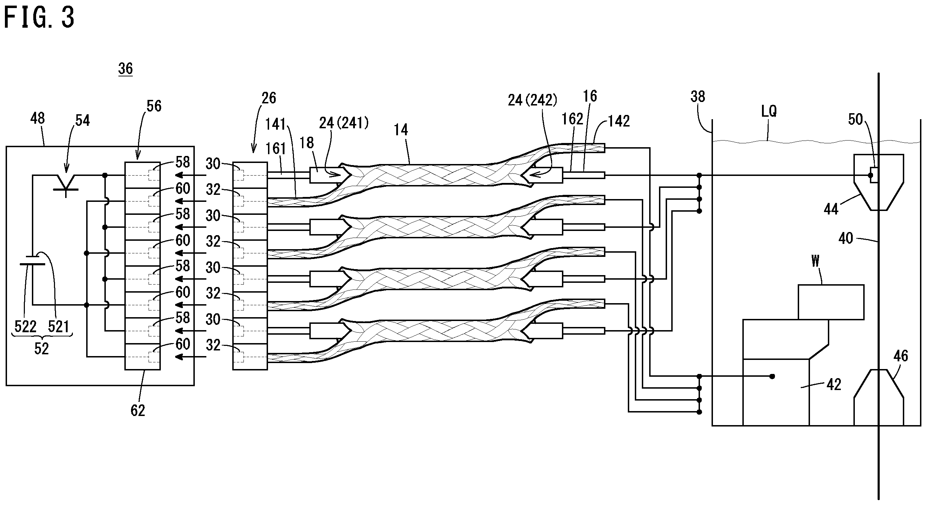

The first connector 28 is a coupling device that is attachable to and detachable from a second connector 56 (see FIG. 3) corresponding to the first connector 28. The first connector 28 includes a plurality of first terminals 30, a plurality of second terminals 32, and a first housing 34.

The number of the first terminals 30 and the number of the second terminals 32 are the same as the number of the coaxial cables 10. The first housing 34 is a casing that houses the plurality of first terminals 30 and the plurality of second terminals 32. In the first housing 34 of FIG. 2, the first terminals 30 and the second terminals 32 are alternately arranged. However, the order of arrangement of the first terminals 30 and the second terminals 32 in the first housing 34 is not particularly limited.

Each coaxial cable 10 is in a state where an end portion 121 of the core wire portion 12 is pulled out from the pull-out hole 24.

Each of the end portions 121 of the plurality of core wire portions 12 includes an end portion (core wire end portion) 161 of the core wire 16. The plurality of core wire end portions 161 are connected (crimped) respectively to different first terminals 30. Thus, the plurality of core wires 16 can be connected to the second connector 56 via the plurality of first terminals 30. Note that, in order to crimp the core wire end portion 161 and the first terminal 30, the insulator 18 of the end portion 121 is removed in advance as necessary.

The plurality of shield end portions 141 are connected (crimped) respectively to the second terminals 32 different from each other. Thus, the plurality of shields 14 can be connected to the second connector 56 via the plurality of second terminals 32.

It is preferable in terms of manufacturing cost that the first connector 28 is provided only at one end portion of both end portions of the plurality of coaxial cables 10 in the longitudinal (cable length) direction. That is, the manufacturing cost of the connector-equipped coaxial cable 26 can be suppressed to be low by not attaching the connector to the other end of the plurality of coaxial cables 10.

FIG. 3 is a schematic configuration diagram of a wire electrical discharge machine 36 including the connector-equipped coaxial cable 26 shown in FIG. 2.

The above-described connector-equipped coaxial cable 26 is provided in, for example, a wire electrical discharge machine 36. The wire electrical discharge machine 36 is a machine tool that carries out electrical discharge machining on a workpiece W (an object to be machined) by causing an electric discharge to be generated between a wire electrode 40 and the workpiece W. The wire electrical discharge machine 36 includes the connector-equipped coaxial cable 26, a work pan 38, a wire electrode 40, a table 42, an upper wire guide 44, a lower wire guide 46, and an electrical discharge device 48.

The work pan 38 is a pan in which a working fluid LQ is stored. The working fluid LQ is a liquid having a dielectric property. The table 42, the upper wire guide 44, and the lower wire guide 46 are disposed in the work pan 38.

The wire electrode 40 is a linear conductive member. The wire electrode 40 runs in the work pan 38. The wire electrode 40 is stretched taut along the vertical direction in the work pan 38. Incidentally, a mechanism for running the wire electrode 40 while stretching the wire electrode 40 taut is known. Therefore, the description of the mechanism is omitted.

The table 42 is a pedestal for supporting a workpiece W. The table 42 and the workpiece W are immersed in the working fluid LQ in the work pan 38. A fixture for fixing the workpiece W onto the table 42 may be installed on the table 42.

The table 42 is electrically connected to the plurality of shields 14. Thus, the workpiece W and the plurality of shields 14 are electrically connected to each other via the table 42.

The table 42 is connected to rear end portions (shield rear end portions) 142 of the plurality of shields 14. The shield rear end portion 142 is an end portion of the shield 14 opposite to the shield end portion 141 crimped to the second terminal 32 (see FIG. 3).

The table 42 disposed inside the work pan 38 and the plurality of shields 14 disposed outside the work pan 38 are connected to each other via, for example, a known through terminal block and a plurality of ground cables. In this case, the through terminal block is mounted to the work pan 38. The through terminal block penetrates a wall of the work pan 38. The plurality of ground cables are arranged in the work pan 38. The plurality of ground cables are connected to the table 42 and the through terminal block. For example, the plurality of ground cables are screwed to the table 42 and the through terminal block. Thus, the table 42 and the through terminal block are connected to each other in the work pan 38. The plurality of ground cables are subjected to a waterproof treatment in advance. The plurality of shield rear end portions 142 are connected to the through terminal block outside the work pan 38 (working fluid LQ). For example, the plurality of shield rear end portions 142 are screwed to the through terminal block. Thus, the table 42 and the plurality of shields 14 are connected. The plurality of shields 14 are not immersed in the working fluid LQ. Illustration of the through terminal block and the plurality of ground cables is omitted.

The table 42 is connected to a plurality of servo motors. The plurality of servo motors are controlled by a control device of the wire electrical discharge machine 36. This control device is, for example, a computerized numerical controller (CNC). The control device controls the plurality of servo motors to move the table 42 horizontally. The plurality of servo motors and the control device are not shown in the drawings.

The workpiece W moves in the work pan 38 integrally with the table 42 as the table 42 moves horizontally. Thus, the relative positional relationship between the workpiece W and the wire electrode 40 in the work pan 38 changes in the horizontal direction. That is, the workpiece W and the wire electrode 40 move relative to each other in the horizontal direction.

The wire electrode 40 in FIG. 3 does not penetrate the workpiece W. However, actual electrical discharge machining may be started from a state in which the wire electrode 40 penetrates the workpiece W.

The upper wire guide 44 is a guide member disposed above the workpiece W in the vertical direction. The wire electrode 40 is fed into the work pan 38 through the upper wire guide 44. The upper wire guide 44 guides the wire electrode 40 toward the workpiece W.

The upper wire guide 44 includes an electrode pin 50. The electrode pin 50 is electrically connected to the core wire rear end portions 162 of the plurality of core wires 16. The core wire rear end portion 162 is an end portion of the core wire 16 opposite to the core wire end portion 161 crimped to the first terminal 30 (see FIG. 3).

The core wire rear end portion 162 can be easily pulled out from the shield 14 through the pull-out hole 24 (242). The pull-out hole 242 is a pull-out hole 24 other than the pull-out hole 24 (241) from which the core wire end portion 161 is pulled out (see FIG. 3). The pull-out hole 242 is easily opened up in the same manner as the pull-out hole 241.

The electrode pin 50 disposed in the work pan 38 and the plurality of core wire rear end portions 162 disposed outside the work pan 38 are connected to each other via, for example, the above-described through terminal block, a metal block, and a plurality of hot cables. In this case, the metal block is in contact with the electrode pin 50. The plurality of hot cables are disposed in the work pan 38. The plurality of hot cables are connected to the metal block and the through terminal block. For example, the plurality of hot cables are screwed to the metal block and to the through terminal block. Thus, the through terminal block and the electrode pin 50 are connected. The plurality of hot cables are subjected to a waterproof treatment in advance. The plurality of core wire rear end portions 162 are connected to the through terminal block outside the work pan 38 (working fluid LQ). For example, the plurality of core wire rear end portions 162 are screwed to the through terminal block. Thus, the electrode pin 50 and the plurality of core wire rear end portions 162 are connected to each other. The plurality of core wire rear end portions 162 (core wires 16) are not immersed in the working fluid LQ. The metal block and the plurality of hot cables are not shown in the drawings. The through terminal block that connects the plurality of core wire rear end portions 162 and the electrode pin 50 may be a terminal block different from the through terminal block that connects the plurality of shields 14 and the table 42.

The electrode pin 50 is in contact with the wire electrode 40. Thus, the wire electrode 40 and the plurality of core wires 16 are electrically connected to each other.

The lower wire guide 46 is a guide member disposed below the workpiece W in the vertical direction. The wire electrode 40 that has passed through the workpiece W is discarded to the outside of the work pan 38 through the lower wire guide 46. The discarded wire electrode 40 is collected in a collection box. The collection box is not shown in the drawings.

The electrical discharge device 48 is a device that applies a voltage pulse (voltage) to the wire electrode 40 and the workpiece W. The electrical discharge device 48 includes a DC power supply (power supply) 52, a switching element 54, and the second connector 56.

The power supply 52 includes a negative terminal 521 and a positive terminal 522. The negative terminal 521 is connected to the switching element 54.

The second connector 56 includes a plurality of third terminals 58, a plurality of fourth terminals 60, and a second housing 62. The second housing 62 is a casing that houses the plurality of third terminals 58 and the plurality of fourth terminals 60.

The plurality of third terminals 58 are connected in parallel to each other. The plurality of third terminals 58 connected in parallel are connected to the switching element 54. Thus, the plurality of third terminals 58 are connected to the negative terminal 521 via the switching element 54.

The plurality of third terminals 58 are connected respectively to mutually different first terminals 30 when the second connector 56 and the first connector 28 are connected to each other. Therefore, each of the plurality of first terminals 30 is connected to the negative terminal 521 via the switching element 54. As a result, the negative terminal 521 and the electrode pin 50 are electrically connected.

The plurality of fourth terminals 60 are connected in parallel to each other. The plurality of fourth terminals 60 connected in parallel are connected to the positive terminal 522.

The plurality of fourth terminals 60 are connected respectively to mutually different second terminals 32 when the second connector 56 and the first connector 28 are connected to each other. Therefore, each of the plurality of second terminals 32 is connected to the positive terminal 522. As a result, the positive terminal 522 and the workpiece W are electrically connected to each other.

The electrical discharge device 48 applies a voltage to the wire electrode 40 and the workpiece W via the connector-equipped coaxial cable 26. Consequently, electric discharge is generated between the wire electrode 40 and the workpiece W. The control device (CNC) may control the electrical discharge device 48. The configuration example of the wire electrical discharge machine 36 has been described above.

As described above, the shield 14 can suppress an increase in impedance. Therefore, the coaxial cable 10 of the present embodiment can cause the machining current to rise more quickly than a general coaxial cable.

As a result, the removed amount of the workpiece W per unit time in accordance with the electric discharge increases. Thus, improvement in machining speed can be expected. Further, since the increase in impedance of the shield 14 is suppressed, the plurality of coaxial cables 10 can flow a large machining current with a smaller number of coaxial cables than in the case of the conventional coaxial cable.

Moreover, the plurality of coaxial cables 10 can be connected collectively to the electrical discharge device 48 via the first connector 28. In this regard, there is a case where the seller or distributor of the wire electrical discharge machine 36 may separately deliver the electrical discharge device 48 and equipment (for example, the work pan 38) other than the electrical discharge device 48 in the wire electrical discharge machine 36 to the delivery destination. In this case, the work of connecting each of the electrode pin 50 and the table 42 to the electrical discharge device 48 is performed at the delivery destination.

The electrical discharge device 48 and the plurality of coaxial cables 10 are easily connected by connecting the first connector 28 and the second connector 56. Thus, the installation work of the wire electrical discharge machine 36 at the delivery destination is quickly performed.

### [Modifications]

Modifications of the above-described embodiment will be described below. However, explanations that overlap with those of the embodiment will be omitted insofar as possible in the following description. Components that have already been described in the above embodiment are denoted by the same reference numerals as in the above embodiment unless otherwise indicated.

### (Modification 1)

The number of the coaxial cables 10 included in the connector-equipped coaxial cable 26 may be one. In this case, the number of the first terminals 30 and the number of the second terminals 32 may each be one.

However, even in this case, the second connector 56 may include a plurality of the third terminals 58 and a plurality of the fourth terminals 60. That is, the number of the third terminals 58 and the number of the fourth terminals 60 may each be larger than the number of the coaxial cables 10, the number of the first terminals 30, and the number of the second terminals 32.

The operator of the wire electrical discharge machine 36 may selectively connect one of a plurality of connector-equipped coaxial cables 26 having different numbers of coaxial cables 10 from each other, to the second connector 56, as appropriate.

### (Modification 2)

The electrode pin 50 may be provided on the lower wire guide 46. In this case also, the wire electrode 40 and the plurality of core wires 16 are electrically connected to each other via the electrode pin 50.

Both the upper wire guide 44 and the lower wire guide 46 may include the electrode pins 50 respectively. In this case, the plurality of core wires 16 include a plurality of core wires 16 connected to the electrode pin 50 of the upper wire guide 44 and a plurality of core wires 16 connected to the electrode pin 50 of the lower wire guide 46.

### (Modification 3)

The connector-equipped coaxial cable 26 may further include a connector (third connector) to which the plurality of core wire rear end portions 162 and the plurality of shield rear end portions 142 are connected. In this case, a connector (fourth connector) connectable to the third connector may be installed in the work pan 38. The third connector may be the same type of connector as the first connector 28.

According to this modification, the coaxial cable 10 can be easily attached to and detached from the electrode pin 50 and the workpiece W. That is, the plurality of core wire rear end portions 162 are connected to the electrode pin 50 via the fourth connector. The plurality of shield rear end portions 142 are connected to the workpiece W via the fourth connector.

Moreover, the present invention is not limited to the above-described embodiment and the exemplary modifications, and can assume various configurations without departing from the essence and gist of the present invention.

### [Inventions Capable of Being Obtained from the Embodiment]

The inventions capable of being grasped from the above-described embodiment and the modifications will be described below.

### <First Aspect of Invention>

A first aspect of the present invention is characterized by the coaxial cable (10) including: the core wire portion (12) that includes the core wire (16) and the tubular insulator (18) that covers the core wire, the core wire portion being linear; and the shield (14) that covers the core wire portion, wherein the shield has the braided structure in which the plurality of bundles (20) each including wires (22) arranged side by side are braided in a mesh pattern, and the plurality of bundles each have a width (WD) equal to or larger than the radius (RD) of the core wire portion.

Thus, the space between the plurality of bundles of the shield can be easily widened to be as large as the diameter of the core wire portion, and hence the core wire can be easily pulled out from the shield.

### <Second Aspect of Invention>

A second aspect of the present invention is characterized by the connector-equipped coaxial cable (the coaxial cable with the connector) (26) including: the coaxial cable (10) according to the first aspect; and the connector (28) connected to the coaxial cable, wherein the connector includes: the first terminal (30) to which the end portion (161) of the core wire is connected, the end portion of the core wire being pulled out from between the plurality of bundles braided in the mesh pattern; and the second terminal (32) to which the end portion (141) of the shield is connected.

This makes it possible to easily connect the coaxial cable to another device (electric circuit) via the connector. Further, the end portion of the core wire portion and the end portion of the shield can be easily separated from each other. Therefore, the connector-equipped coaxial cable is easy for manufacturers to manufacture.

The connector-equipped coaxial cable may include the plurality of coaxial cables, and the connector may include the plurality of first terminals and the plurality of second terminals. This allows the plurality of coaxial cables to be collectively connected to another device (for example, an electrical discharge device) at once.

### <Third Aspect of Invention>

A third aspect of the present invention is characterized by the wire electrical discharge machine (36) including: the connector-equipped coaxial cable (26) according to the second aspect; the wire electrode (40) movable relative to the workpiece (W); and the electrical discharge device (48) connected to the connector, the electrical discharge device (48) being configured to apply a voltage to the wire electrode and the workpiece via the coaxial cable to generate electric discharge between the workpiece and the wire electrode, wherein the electrical discharge device is connected to one of the wire electrode and the workpiece via the core wire, and is connected to another of the wire electrode and the workpiece via the shield.

Thus, the electrical discharge device and the coaxial cable can be easily connected to each other via the connector.

### Reference Signs List

- 10:: coaxial cable
- 12:: core wire portion
- 14:: shield
- 16:: core wire
- 18:: insulator
- 20:: bundle
- 22:: wire
- 26:: connector-equipped coaxial cable
- 28:: first connector (connector)
- 30:: first terminal
- 32:: second terminal
- 36:: wire electrical discharge machine
- 40:: wire electrode
- 48:: electrical discharge device
- 141:: shield end portion
- 161:: core wire end portion
- RD:: radius of core wire portion
- W:: workpiece
- WD:: width of bundle

## Claims

1. A coaxial cable (10) comprising:
a core wire portion (12) that includes a core wire (16) and a tubular insulator (18) that covers the core wire, the core wire portion being linear; and
a shield (14) that covers the core wire portion,
wherein
the shield has a braided structure in which a plurality of bundles (20) each including wires (22) arranged side by side are braided in a mesh pattern, and
the plurality of bundles each have a width (WD) equal to or larger than a radius (RD) of the core wire portion.

2. A connector-equipped coaxial cable (26), comprising:
the coaxial cable according to claim 1; and
a connector (28) connected to the coaxial cable,
wherein
the connector includes:
a first terminal (30) to which an end portion (161) of the core wire is connected, the end portion of the core wire being pulled out from between the plurality of bundles braided in the mesh pattern; and
a second terminal (32) to which an end portion (141) of the shield is connected.

3. The connector-equipped coaxial cable according to claim 2, wherein
the coaxial cable comprises a plurality of coaxial cables, and
in the connector, the first terminal comprises a plurality of first terminals and the second terminal comprises a plurality of second terminals.

4. A wire electrical discharge machine (36) comprising:
the connector-equipped coaxial cable according to claim 2 or 3;
a wire electrode (40) movable relative to a workpiece (W); and
an electrical discharge device (48) connected to the connector, the electrical discharge device (48) being configured to apply a voltage to the wire electrode and the workpiece via the coaxial cable to generate electric discharge between the workpiece and the wire electrode,
wherein
the electrical discharge device is connected to one of the wire electrode and the workpiece via the core wire, and is connected to another of the wire electrode and the workpiece via the shield.
